# FASCICULE DE BREVET EUROPEEN

(11) **EP 2 528 777 B1**
(45) Date de publication et mention de la délivrance du brevet: **09.12.2015**
(21) Numéro de dépôt: 11736672.4
(22) Date de dépôt: 24.01.2011
(51) Int. Cl.: B60Q 3/02

(54) **VITRAGE LUMINEUX DE VÉHICULE**
LEUCHTENDE FAHRZEUGVERGLASUNG
LUMINOUS VEHICLE WINDOW

(30) Priorité: 26.01.2010 FR 1050526
(43) Date de publication de la demande: 05.12.2012
(73) Titulaire: Saint-Gobain Glass France, 92400 Courbevoie (FR)
(72) Inventeur: KLEO, Christophe, 60350 Attichy (FR); GRANDGIRARD, Bastien, 60490 Marqueglise (FR); RICHARD, Alexandre, 75019 Paris (FR); VERRAT-DEBAILLEUL, Adèle, 60150 Villers Sur Coudun (FR)
(74) Mandataire: Ribeaudeau, Marion Christine
(86) Numéro de dépôt international: PCT/FR2011/050126
(87) Numéro de publication internationale: WO 2011/092420

(56) Documents cités:
- WO-A1-2008/090646
- WO-A2-2006/137660
- FR-A1- 2 895 781
- US-A1- 2009 225 565
- US-B1- 6 305 109

## Description

La présente invention concerne les vitrages de véhicules, et en particulier les vitrages lumineux de véhicules, notamment à diodes électroluminescentes, et le procédé de fabrication de tels vitrages de véhicules.

De plus en plus de véhicules font appel aux diodes électroluminescentes (LED en anglais ou DEL en français).

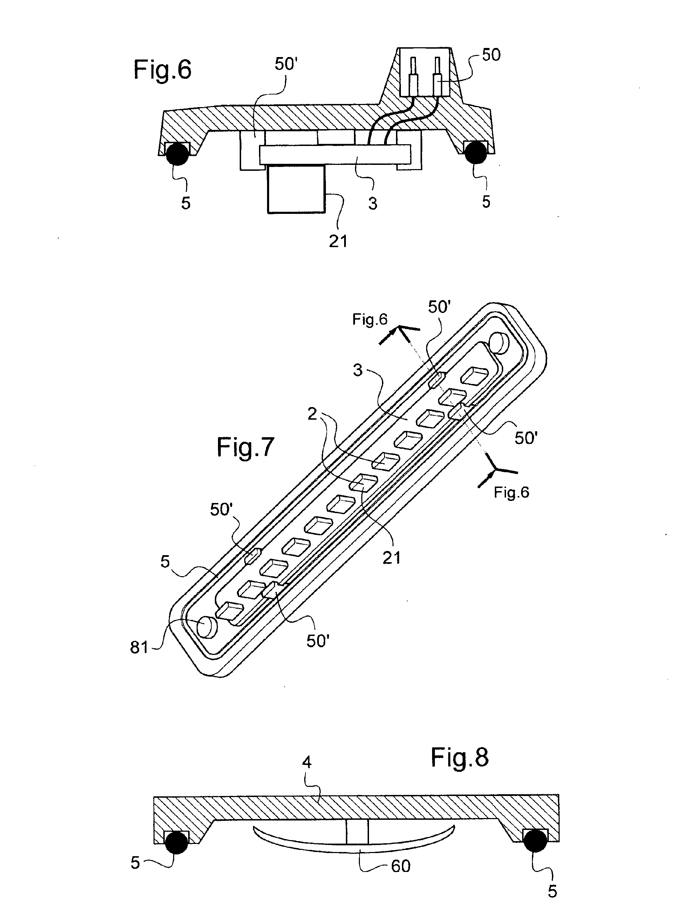

Le document WO2006128941 propose par exemple un toit panoramique à éclairage homogène sur la surface par diode(s) électroluminescente(s). Ce toit comporte une structure feuilletée qui, comme montrée en figure 8, est composée d'une feuille externe extractrice de lumière, d'une feuille centrale transparente de guidage de lumière, et d'une feuille interne de diffusion de la lumière. La source de lumière est une pluralité de diodes électroluminescentes montées sur un support latéral fixé à la tranche des feuilles interne et externe tandis qu'un trou est pratiqué dans la feuille centrale pour loger les diodes.

Le toit panoramique est fixé par collage des bords périphériques de la feuille externe à la carrosserie du toit. Les diodes et la zone de collage périphérique sont masquées par la garniture interne.

L'invention se propose d'élargir la gamme des vitrages éclairants de véhicule disponibles.

La présente invention vise en effet un vitrage lumineux de véhicule à source de lumière écologique et efficace (diodes électroluminescentes, fibre(s) optique(s) couplé à des diodes par exemple), convenant notamment pour toute configuration de toit, et particulièrement les toits montés par l'extérieur au toit de carrosserie, toits ouvrants ou fixes.

Pour cela, le vitrage lumineux de véhicule doit être durable, compact, robuste tout en restant simple, répondant ainsi au cahier des charges imposés par les constructeurs de véhicule.

La présente invention vise aussi un vitrage lumineux de véhicule satisfaisant aux exigences industrielles (en termes de rendement, donc de coût, de cadence, d'automatisation...), rendant ainsi possible une production « bas coût » sans sacrifier les performances.

L'invention propose à cet effet un vitrage lumineux de véhicule comportant :
- une première feuille en verre minéral ou organique présentant une première face principale et une deuxième face principale et une tranche,
- une source lumineuse périphérique avec une face émettrice, choisie parmi une fibre optique et des diodes électroluminescentes comportant chacune une puce semi-conductrice sur (au moins) un profilé support des diodes, (l'ensemble profilé et diodes étant appelé couramment une barrette de diodes), la face émettrice étant en regard d'un bord de la deuxième face dit d'injection (en contact ou non de la deuxième face) pour une propagation de la lumière injectée visible et/ou ultraviolet dit UV dans l'épaisseur de la première feuille, la première feuille jouant alors le rôle de guide de la lumière injectée, (le bord d'injection éventuellement étant en partie évidé dans son épaisseur voire avec un décrochement),
- pour former au moins une zone lumineuse :
   - des moyens d'extraction de la lumière guidée via la première et/ou la deuxième face principale, qui sont des moyens de diffusion en surface de la première et/ou de la deuxième face principale ou des moyens de diffusion en volume dans la première feuille,
   - et/ou lorsque la lumière injectée est (notamment) UV, des moyens de conversion de la lumière UV en lumière visible via la première et/ou la deuxième face principale, qui sont des luminophores notamment sur la première et/ou de la deuxième face principale (alors face d'extraction),
- un éventuel élément fonctionnel périphérique rapporté (donc distinct de la première feuille), lié à la première feuille (notamment par une face interne et l'élément ayant notamment une face libre externe), qui est étanche au(x) fluide(s), notamment à l'eau liquide voire vapeur, (l'élément fonctionnel étant par exemple adjacent au bord d'injection), notamment un élément fonctionnel qui est choisi parmi un surmoulage ou un élément prémonté, (métallique ou polymérique, de préférence

choisi parmi un encapsulât, un extrudât, un joint, notamment collé sur la première feuille)
- un capot de couverture de la source, étanche au(x) fluide(s), notamment à l'eau liquide voire vapeur,
- le capot dit facial, c'est à dire essentiellement (ou entièrement) en regard (au-dessus de) de la deuxième face, solidaire par des moyens de fixation
   - à la première feuille (de préférence par la deuxième face), notamment en verre organique
   - et/ou à une pièce de liaison (7') liée à la première feuille,
   - et éventuellement à l'élément fonctionnel (par sa face externe) le capot ayant une face générale dite interne orientée vers la deuxième face le capot étant associé à un élément interfacial, pour l'étanchéité interfaciale au(x) fluide(s), notamment à l'eau liquide voire vapeur qui est agencé
   - entre le capot et la pièce de liaison et éventuellement entre le capot et l'élément fonctionnel (avec un bord dit bord d'appui)
   - ou intégré au capot, ou intégré à la pièce de liaison ou intégré à la première feuille.

Ainsi la présente invention propose un vitrage lumineux durable, même lorsque le vitrage n'est pas protégé par la carrosserie, ceci grâce aux moyens d'étanchéité simples et adaptés, supprimant des chemins de diffusion de fluide(s).

Le capot étanche associé à l'étanchéité interfaciale est facile à (re)positionner, retirable (démontable, remplaçable à moindre cout) si nécessaire :
- pour changer la source de lumière (des DEL etc) et/ou leur pilotage électronique lors de réparation, ou de recyclage ou encore
- pour faire face à de nouvelles d'exigences de performances optiques souhaitées par le client (changement de couleur(s), de puissance, de fréquence, de commande) ou par de nouvelles normes imposées,
- et/ou pour (r)ajouter des sources (DEL et/ou fibre optique) et/ou des pilotages électroniques dans un vitrage avec l'évidement et les tels moyens d'étanchéité selon l'invention.

L'invention facilite ainsi la modularité de l'éclairage proposé sur le vitrage (vitrage éclairant ou pouvant de le devenir, variation de couleur, intensité...) - au niveau de la gestion logistique des flux en production (montage en dépôt avancé plutôt qu'à la demande du client).

L'invention réduit l'impact de l'intégration de la source (DEL etc) sur le choix des procédés et matières et permet de ne pas être dépendant d'une technologie de réalisation car elle offre un large panel de solutions d'encapsulation ou de pré-montage utilisables.

Par ailleurs, la solution selon l'invention est souple, car le capot peut être mis en place indépendamment de la source (par exemple de la ou des barrettes de DEL).

L'invention rend possible la fabrication d'un vitrage lumineux de véhicule avec un éventuel élément fonctionnel, rapporté sur le vitrage de manière habituelle, notamment fabriqué selon les techniques habituelles (extrudé, moulé...), l'élément fonctionnel pouvant être modifié de manière appropriée (évidé) pour servir d'appui au capotage en post montage.

Le capot, dans certaines configurations, n'est pas visible après montage sur la carrosserie du véhicule.

Par ailleurs, le capot et l'élément d'étanchéité interfaciale selon l'invention sont utiles en particulier pour une protection contre l'humidité de la source, notamment des puces, pour éviter une pollution de l'espace de couplage (salissures, pollution organique, type moisissures...) et de préférence aux produits de nettoyage, ou à un lavage par jet à haute pression. Cette protection doit être pérenne.

Pour qualifier l'étanchéité à l'humidité à long terme on peut recourir au test cataplasme humide. Par exemple la norme D47 1165-H7 utilisée dans l'automobile décrit le test de cataplasme humide H7.

Ce test consiste à noyer la pièce à tester dans du coton imbibé d'eau déminéralisée et à enfermer le tout dans un sac hermétique, puis à le placer en étuve à 70+/- 2°C pendant 7 jours. Ensuite les pièces sont sorties, débarrassées du coton trempé et placées à 20°C pendant 2 heures. Les pièces peuvent enfin être observées et testées mécaniquement ou fonctionnellement pour évaluer l'effet de l'humidité sur le système. Ce test correspond à plusieurs années de vieillissement naturel en milieu humide et chaud.

On peut aussi utiliser un test de nettoyage par jet d'eau haute pression, comme le test de résistance au lavage par nettoyeur haute pression D25 5376 utilisé dans l'automobile : pression jusqu'à 100 bars avec une distance buse/caisse jusque 100 mm.

La solution selon l'invention mettant en oeuvre un ensemble de moyens pour l'étanchéité est préférée à une encapsulation totale « monolithique », notamment de surmoulage (encapsulat..) ou par un enrobage de colle, d'adhésif, dans laquelle la source lumineuse (comme par exemple les barrettes de DEL) seraient entièrement encapsulées solution rendant la source lumineuse difficilement accessible sous peine de l'abimer.

En outre, l'encapsulation totale est délicate et peut détériorer la source en particulier les LEDS (et/ou leur circuit électronique) déjà montées, induisant des coûts de rebuts important, sauf à prendre des précautions rendant la fabrication complexe.

De la même façon, l'intégration de la source telle qu'une barrette à LEDs est difficile voire impossible dans le cas d'une extrusion ou d'une pièce moulée du fait du risque de dégradation de la fonction lumière.

Dans un mode de réalisation avantageux, simple à réaliser, la première feuille est en verre notamment organique, notamment en PC, avec un trou borgne dans son épaisseur, de la deuxième face, par exemple un décrochement, pour loger la source en regard du bord d'injection.

Dans une feuille en verre organique, notamment en plastique (PC etc), on peut en effet pratiquer plus facilement un trou, une rainure que dans une feuille en verre minérale, notamment trempée.

Dans un mode de réalisation préféré, le trou est sur tout le pourtour de la deuxième face et le capot forme un cadre notamment intégrant lesdits moyens de fixation (par vissage ou clipsage etc).

La section du capot peut être alors par exemple en L, en U, intégrer lesdits moyens de fixation par exemple de type vissage, clipsage, rivetage, collage.

Le vitrage comprend un élément de masquage de la source et d'éventuelle lumière parasite (notamment en face opposée à la face d'extraction, à proximité de la zone d'injection), et/ou de masquage de la fixation du vitrage à la carrosserie du véhicule par la deuxième face, l'élément de masquage pouvant être
- un partie d'élément fonctionnel, notamment une encapsulation polymérique (suffisamment opaque, noire),
- et/ou un émail suffisamment opaque, sur la périphérie de la deuxième face et/ou sur la première face ou une face d'un film en feuille rapporté en regard de la première face notamment lorsque l'élément fonctionnel est monoface ou biface,
- et/ou une surface réfléchissante (couche ...) sur la périphérie de la deuxième face et/ou sur la première face ou une face rapportée en regard de la première face

En particulier la première feuille est organique, bimatière transparente et opaque, notamment en polycarbonate :
- la zone opaque de la première feuille sur la périphérie de la deuxième face et/ou sur la première face, forme un masquage de la source et d'éventuelle lumière parasite (à proximité de l'injection),
   et/ou forme un masquage de la fixation du vitrage à la carrosserie du véhicule par la deuxième face.

De manière avantageuse le vitrage peut comporter plusieurs sources, notamment groupes desdites diodes réparties sur plusieurs profilés (donc plusieurs barrettes de diodes),
- un capot et un élément d'étanchéité interfaciale sont prévus pour chaque groupe (barrette) de diodes
- et/ou le capot et l'élément d'étanchéité interfaciale étant communs à plusieurs (barrettes) groupes de diodes

De préférence la distance entre la face interne du capot et la première face est inférieure à 10 mm.

De préférence, la distance entre la face externe du capot le bord ou la tranche d'injection est inférieure à 15 mm. L'épaisseur du capot peut être inférieure à 5mm.

Par ailleurs, l'espace des rayonnements émis avant injection, dudit espace de couplage varie naturellement en fonction du diagramme de rayonnement de la source, défini par une direction principale d'émission et un cône d'émission.

On peut prévoir une matière de remplissage de l'espace de couplage transparente au(x)dit(s) rayonnement(s) adhésive ou non, notamment :
- une mousse, une résine thermoplastique,
- une matière adhésive, de type colle, noyant les puces et fixant les puces au vitrage.
- un adhésif double face, collé sur les puces et le support par une face adhésive et collé au vitrage par l'autre face adhésive.

Comme matières adhésives (polymères etc) remplissant si nécessaire une fonction d'étanchéité à court terme, on peut citer :
- colle réticulable aux UV,
- une bande (acrylique, PU..) adhésivée avec colle acrylique,
- une colle transparente, PU, silicone, acrylique,
- une résine thermoplastique : polyvinyl butyral (PVB), copolymère éthylène/acétate de vinyle (EVA) ...

Toutefois l'invention permet d'éviter l'ajout d'un élément supplémentaire tel que précité (matière de remplissage et/ou adhésive et/ou matière étanchéité) pour réaliser le couplage optique entre les DEL (nues ou pré-encapsulées) et le vitrage. De tels éléments engendrent un surcoût et sont susceptibles de modifier la couleur de la lumière.

On préfère que l'espace des rayonnements émis avant injection, dit espace de couplage soit gazeux (un ou plusieurs gaz, par exemple de l'air) et/ou l'élément d'étanchéité interfaciale au(x) fluide(s), local, est en périphérie de la face interne du capot ou sur un côté du capot, notamment l'élément d'étanchéité interfaciale au(x) fluide(s) forme un cordon.

Les diodes peuvent être (pré) encapsulées, c'est-à-dire comprenant une puce semi-conductrice et une enveloppe, par exemple en résine type époxy ou en PMMA, encapsulant la puce et dont les fonctions sont multiples : élément diffusant ou de focalisation, conversion de longueur d'onde. L'enveloppe est commune ou individuelle.

Les diodes peuvent être de préférence simples puces semiconductrices par exemple de taille de l'ordre de la centaine de µm ou du mm.

Les diodes peuvent éventuellement comprendre une enveloppe protectrice (provisoire ou non) pour protéger la puce lors de manipulations ou pour améliorer la compatibilité entre les matériaux de la puce et d'autres matériaux.

La diode peut être choisie notamment parmi au moins l'une des diodes électroluminescentes suivantes :
- une diode à émission latérale, c'est-à-dire parallèlement aux (faces de) contacts électriques, avec une face émettrice latérale par rapport au support,
- une diode dont la direction principale d'émission est perpendiculaire ou oblique par rapport la face émettrice de la puce.

Le diagramme d'émission d'une source peut être lambertien.

Le vitrage peut ainsi intégrer toutes fonctionnalités connues dans le domaine du vitrage. Parmi les fonctionnalités rajoutées sur le vitrage, on peut citer : couche hydrophobe/oléophobe, hydrophile/oléophile, photocatalytique antisalissure, empilement réfléchissant le rayonnement thermique (contrôle solaire) ou infra rouge (bas-émissif), antireflet.

Le profilé support peut être un PCB classique ou être métallique. Le profilé support peut avoir une section rectangulaire.

Le nombre total de diodes, la puissance des diodes sont choisies par la taille et la localisation des zones à éclairer, par l'intensité lumineuse souhaitée et l'homogénéité de lumière requise.

La longueur du profilé support varie en fonction du nombre de diodes et de l'étendue de la surface à éclairer.

Le profilé support de DEL a une longueur par exemple de l'ordre de 20 cm. On multiplie de préférence le nombre de barrettes de DEL (profilé + DEL) pour couvrir la surface.

Pour davantage de compacité et/ou une conception simplifiée, le profilé support peut présenter en outre l'une ou les caractéristiques suivantes :
- être mince, notamment d'épaisseur inférieure ou égale à 1 mm, voire à 0,1 mm,
- avoir un revêtement de surface métallique pour une conduction électrique,

On peut prévoir plusieurs profilés supports à diodes identiques ou similaires au lieu d'un seul profilé support notamment si les zones à éclairer sont très distantes entre elles ou pour éclairer une large zone.

On peut prévoir un profilé support avec une taille de référence donnée multiplié en fonction de la taille du vitrage et des besoins.

Pour davantage de compacité et/ou pour augmenter la zone de clair de vitre, la distance entre la partie porteuse des puces et la première feuille est de préférence inférieure ou égale à 5 mm, et de préférence la distance entre les puces et la première feuille est inférieure ou égale à 2 mm.

La fixation de la source au vitrage peut être également réalisée en dehors de l'espace de couplage, notamment en dehors du bord d'injection et pour les diodes par la fixation du profilé support, notamment par collage ou adhésif double face ou clipsage sur l'une des faces de la première feuille, notamment la deuxième face, ou sur la face interne du capot.

Comme moyens de fixation « permanents » du capot, on peut choisir un collage, une soudure, ou encore un bouterollage, en fonction du type de pièce.

Comme moyens d'étanchéité interfaciale « permanents », on peut choisir un collage, une soudure, pouvant aussi être les moyens de fixations.

Toutefois, pour faciliter le démontage voire le remplacement du capot, l'élément d'étanchéité interfacial, de préférence en périphérie du capot, est une colle réversible, faisant partie ou constituant lesdits moyens de fixation du capot alors réversibles, de préférence un cordon de colle arrangé en cordon notamment en contact avec la face interne du capot ou la pièce de liaison (par sa face libre externe) ou la deuxième face, notamment colle de type epoxy bi-composant.

Comme colle réversible, on peut citer des époxys notamment bicomposants par exemple les produits de la gamme ElectRelease™ de la société EIC Laboratories .

Alternativement ou cumulativement, pour faciliter le démontage et le remontage, l'élément d'étanchéité interfacial, de préférence en périphérie du capot, est une matière comprimée, l'étanchéité par compression de la matière étant réalisée par un effort de fermeture desdits moyens de fixation du capot, notamment l'élément d'étanchéité interfacial est choisi parmi :
- un joint polymérique par exemple en TPE, en EPDM notamment un joint torique, à lèvre(s) d'étanchéité, le joint étant notamment dans une rainure du capot (sur la face interne du capot ou dans une rainure sur un côté du capot) ou de la deuxième face ou de la pièce de liaison,
- un profil d'étanchéité sur la pièce de liaison, choisie polymérique, par exemple lèvre(s), notamment en EPDM, ou sur la face interne ou un côté du capot choisi polymérique ;
- une mousse éventuellement adhésivée (au capot ou à la pièce de liaison ou à la deuxième face) notamment mousse acrylique, PU, caoutchouc (EDPM..), thermoplastiques élastomères, en TPE, en polyester, notamment en polyester caoutchouc monocomposant tel que le produit Dynafoam vendu par la société Saint - Gobain Performance Plastics.

On peut ainsi s'affranchir de l'usage d'adhésif d'étanchéité.

Dans un premier mode de réalisation avantageux, de préférence en relation avec l'étanchéité par compression, les moyens de fixation sont réversibles, les moyens de fixation sont choisis parmi :
- des moyens de clipsage, ponctuels (ergots ...) ou étendus (c'est-à-dire s'étendant sur toute la longueur du capot), agencés sur le capot (face interne..), de préférence faisant partie intégrante du capot, (de préférence dans la zone d'étanchéité définie par l'élément d'étanchéité interfacial), et notamment reçus pour le clipsage dans une ou des zones d'accueil dans la première feuille notamment organique, et/ou de la pièce de liaison et éventuellement reçus en outre dans l'élément fonctionnel ;
- des moyens de clipsage, de type crochet, faisant partie intégrante du capot, de préférence en dehors dans la zone d'étanchéité et notamment reçus dans une ou des zones d'accueil de la première feuille notamment organique, et/ou de la pièce de liaison et éventuellement reçus en outre dans l'élément fonctionnel ;
- des moyens de vissage, (tels que vis, boulon) par exemple dépassant de la face interne, (par exemple logés dans des perforations du capot ou faisant partie intégrante du capot facial, éventuellement via des trous borgnes), de préférence dans la zone d'étanchéité, entre l'élément d'étanchéité interfacial et le bord de l'évidement.
On peut ainsi s'affranchir de l'usage d'adhésif de fixation
la pièce de liaison forme de préférence une pièce évidée monoface à contour fermé tel qu'un cadre.

Le capot, peut être une pièce de forme générale sensiblement plane). Le capot peut être un enjoliveur, (notamment de la couleur de carrosserie du véhicule), ou être masqué après fixation du vitrage à la carrosserie, capot par exemple le long d'un bord ou formant un cadre.

Le capot peut comprendre en outre des moyens de maintien dudit profilé et/ou un évidement pour le passage de la connectique et/ou des moyens de positionnement du profilé support des diodes (par exemple des rainures, des butées locales.., des plots).

Le capot peut comprendre en outre
- l'intégration éventuelle des fils et connectiques d'alimentation électriques (par exemple d'une barrette de diodes à l'autre) préalablement à l'intégration des diodes (surmoulage des fils ou prévoir des gorges...),
- de faciliter la sortie des fils par rapport à des connecteurs de l'alimentation principale (pouvant être la batterie, une source photovoltaïque...) au niveau de la zone de capotage par le biais d'une broche intégrée.

De préférence, le facteur de transmission de la première feuille autour du pic du rayonnement des puces (perpendiculairement aux faces principales) est supérieur ou égal à 50%, encore plus préférentiellement supérieur ou égal à 70%, et même supérieur ou égal à 80%.

Le vitrage peut avoir une couche dite protectrice (une feuille, un film, un dépôt...) sur l'une des première ou deuxième faces ou s'étendant sur ladite face. Cette couche peut avoir une fonction double :
- diffusion de lumière (par exemple film souple en PU, PE, silicone éventuellement collé par acrylique),
- protection aux rayonnements (IR, UV) : contrôle solaire, basse émissivité...,
- anti rayures,
- esthétique (teintée, avec motifs etc).

On peut prévoir de préférence pour le ou les bords de couplage de la première feuille des bords arrondis. En particulier dans le cas où l'espace des rayonnements émis est de l'air, il est possible de tirer parti de la réfraction au niveau de l'interface air/première feuille de géométrie appropriée (bord arrondi, voire même biseauté...) permettant ainsi de focaliser les rayons dans la première feuille.

Le verre peut avoir éventuellement préalablement subi un traitement thermique du type durcissement, recuit, trempe, bombage.

Le vitrage est simple, la première feuille étant en verre minéral ou organique, notamment en PC, PMMA, PU, résine ionomère, polyoléfine, éventuellement bimatière.

Le vitrage peut être feuilleté (plusieurs feuilles) formé :
- d'une première feuille transparente, verre minéral (flotté etc) ou organique (PC, PMMA, PU, résine ionomère, polyoléfine), épaisse ou mince,
- d'un intercalaire de feuilletage en matériau de feuilletage donné,
- d'une deuxième feuille (opaque ou non, transparente, teintée, en verre minéral, ou organique à fonctionnalités diverses : contrôle solaire..).

Comme intercalaire de feuilletage usuel, on peut citer le PU utilisé souple, un thermoplastique sans plastifiant tel que le copolymère éthylène/acétate de vinyle (EVA), le polyvinylbutyral (PVB). Ces plastiques ont par exemple une épaisseur entre 0,2 mm et 1,1 mm, notamment 0,38 et 0,76 mm.

On peut notamment choisir comme première feuille / intercalaire / deuxième feuille :
- verre minéral / intercalaire / verre minéral,
- verre minéral / intercalaire / polycarbonate,
- polycarbonate (épais ou non) / intercalaire / verre minéral.

Dans la présente description, en l'absence de précision, on entend par verre, un verre minéral.

On peut découper le bord de la première feuille (détourage avec évidements avant trempage) d'un vitrage simple ou feuilleté ou d'un double vitrage pour y loger les diodes.

Les premières et/ou deuxième feuilles peuvent être de toute forme (rectangulaire, carré, rond, ovale,...), et être planes ou galbées.

La première feuille peut être préférentiellement en verre sodocalcique, par exemple en verre PLANILUX de la société SAINT GOBAIN GLASS.

La deuxième feuille peut être colorée par exemple en verre VENUS de la société SAINT GOBAIN GLASS.

Le vitrage feuilleté comprend une deuxième feuille, notamment en verre minéral ou organique est feuilletée par un intercalaire de feuilletage à la première feuille et de préférence la tranche de la première feuille comporte un évidement marginal traversant dans l'épaisseur où est logée la source, ou la deuxième feuille est dépassante du bord d'injection de la première feuille, créant un décrochement latéral du vitrage,

Le vitrage peut être un vitrage multiple isolant, sous vide, notamment double ou triple vitrage formé :
- d'une première feuille transparente, verre minéral (flotté etc) ou organique (PC, PMMA, PU, résine ionomère, polyoléfine), épaisse ou mince,
- d'une deuxième feuille espacée par une lame de gaz (air ou gaz inerte) (opaque ou transparente, teintée, en verre minéral ou organique à fonctionnalités diverses : contrôle solaire..).
- d'une éventuelle troisième feuille espacée par une lame de gaz (air ou gaz inerte) (opaque ou transparente, teintée, en verre minéral, ou organique à fonctionnalités diverses : contrôle solaire..).

Le vitrage est un vitrage multiple, notamment un vitrage feuilleté, un double vitrage sous vide ou isolant, ou encore un triple vitrage la première feuille étant une feuille externe ou centrale du triple vitrage.

Pour l'extraction de la lumière on emploie des moyens de diffusion, formés soit par un traitement superficiel de la feuille de verre du type sablage, attaque acide, dépôt d'émail ou de pâte diffusante, soit par un traitement dans la masse du verre de type gravure laser.

La couche diffusante peut être composée d'éléments contenant des particules et un liant, le liant permettant d'agglomérer entre elles les particules. Les particules peuvent être métalliques ou des oxydes métalliques, la taille des particules peut être comprise entre 50 nm et 1 µm, de préférence le liant peut être minéral pour une résistance à la chaleur.

Dans un mode de réalisation préféré, la couche diffusante est constituée de particules agglomérées dans un liant, lesdites particules présentant un diamètre moyen compris entre 0,3 et 2 microns, ledit liant étant dans une proportion comprise entre 10 et 40% en volume et les particules formant des agrégats dont la dimension est comprise entre 0,5 et 5 microns. Cette couche diffusante préférée est particulièrement décrite dans la demande WO0190787.

Les particules peuvent être choisies parmi des particules semi-transparentes et de préférence des particules minérales telles que des oxydes, des nitrures, des carbures. Les particules seront de préférence choisies parmi les oxydes de silice, d'alumine, de zircone, de titane, de cérium, ou d'un mélange d'au moins deux de ces oxydes.

Par exemple, on choisit une couche minérale diffusante d'environ 10 µm.

Pour davantage de compacité et/ou pour réduire ou augmenter la zone de clair de vitre, la distance de la face émettrice et de la première feuille peut être inférieure à 2 mm. Notamment, on peut utiliser des diodes d'encombrement réduit par exemple des puces sans lentille et/ou sans pré-encapsulation notamment de largeur de l'ordre de 1 mm, de longueur de l'ordre de 2,8 mm, de hauteur de l'ordre de 1,5 mm.

L'élément fonctionnel éventuel peut présenter une ou des fonctionnalités standards pour le vitrage de véhicule.

La fonctionnalité (simple ou multiple) de l'élément fonctionnel peut être l'une ou les suivantes :
- cadre du vitrage (monoface, biface, triface), notamment de largeur sur la première face de 3 à 100 mm, de 10 à 40 mm d'épaisseur,
   et/ou
- pièce porteuse d'éléments de fixation ou de centrage (c'est-à-dire pour un bon positionnement du vitrage sur la carrosserie du véhicule lors du montage du vitrage chez le constructeur),
- pièce d'étanchéité au(x) fluide(s) (eau liquide, vapeur, produits de nettoyage...) entre le vitrage et la carrosserie du véhicule, au moins limitant le passage des fluides entre le vitrage et la carrosserie du véhicule,
- pièce opaque et/ou de masquage,
   et/ou
- pièce (ponctuelle) de maintien d'éléments mécaniques (« holder » de vitre latérale...).

L'élément fonctionnel périphérique est lié à la première feuille. L'élément fonctionnel peut être un encapsulât, un extrudât, un joint prémonté (lécheur), une pièce moulée, injectée....

L'élément fonctionnel est directement sur la première feuille ou indirectement par exemple via un élément, de renfort, d'adhésion.

L'élément fonctionnel peut être ainsi lié au vitrage par tout moyen :
- adhésion directe de la matière (moulée...),
- pincement ou chaussement,
- moyen de liaison de type collage, etc.

L'élément fonctionnel peut être monoface c'est-à-dire seulement :
- sur la deuxième face,
- sur la tranche de la première feuille, dans le cas d'un vitrage feuilleté ou d'un double ou triple vitrage (surtout dans les bus et dans le ferroviaire ou encore pour l'aérien) sur tout ou partie la tranche du vitrage.

L'élément fonctionnel peut être :
- biface : sur la deuxième face et sur la tranche ou sur la première face et sur la tranche
- voire triface : sur la première face, sur la tranche d'au moins la première feuille (ou du vitrage) et sur la deuxième face de la première feuille.

L'élément fonctionnel sur la deuxième face peut servir pour masquer la source et même de la lumière parasite.

Le vitrage lumineux de véhicule comporte ainsi un élément fonctionnel surmoulé, polymérique, et de préférence entre l'encapsulation et le vitrage, notamment en verre minéral, une couche de primaire, mono, bi ou tri-composants, par exemple à base de polyuréthane, polyester, polyvinyle acétate, isocyanate.

Comme déjà vu, l'élément fonctionnel peut être une encapsulation polymérique, notamment épaisse de 0,5 mm à plusieurs cm, obtenue par surmoulage.

Dans les applications de véhicules, la matière d'encapsulation est généralement noire ou colorée (pour des fins esthétiques et/ou de masquage). L'encapsulation peut être en polyuréthane, notamment en PU-RIM (reaction in mold en anglais). D'autres matières de surmoulage sont :
- les thermoplastiques souples :
- thermoplastique élastomère (TPE), notamment composés à base de styrène éthylène butadiène styrène SEBS/ polypropylène (PP), thermoplastique TPU, polypropylène PP/EPDM,
- polyvinyle chlore (PVC), terpolymère éthylène-propylène-diène (EPDM),
- thermoplastiques rigides :
- polycarbonate (PC), polyméthacrylate de méthyle (PMMA), polyéthylène (PE), polypropylène (PP), polyamide (PA66), acrylonitrile butadiène styrène (ABS), et leurs alliages ABS-PC, polystyréne (PS), acrylonitrile styrène acrylate ASA,

La matière de surmoulage peut être colorée, chargée des fibres de verre.

La couche de primaire, mono, bi ou tri-composants, est par exemple à base de polyuréthane, polyester, polyvinyle acétate, isocyanate ..., par exemple épaisse de 5 à 50 µm, entre l'encapsulation et le vitrage en particulier en verre minéral, car cette couche favorise l'adhésion à un verre minéral.

L'élément fonctionnel (surmoulé) apporte également une bonne finition esthétique et permet d'intégrer d'autres éléments ou fonctions :
- surmoulage de cadres,
- inserts de renforcement ou inserts de fixation du vitrage, notamment pour les vitrages ouvrants,
- profil d'étanchéité à lèvres multiples (double, triple ...), s'écrasant après montage sur la carrosserie.
- enjoliveur.

L'élément fonctionnel surmoulé peut être de toute forme, avec ou sans lèvre.

Un tubing, autrement dit un profil d'étanchéité à cellules fermées, peut aussi être accolé à l'élément fonctionnel surmoulé.

De préférence pour un toit, on réalise une encapsulation flush, c'est-à-dire affleurante à une des faces du vitrage, la deuxième face de préférence

Le vitrage lumineux de véhicule peut comprendre un élément fonctionnel qui est une pièce monoface sur la deuxième face, notamment un surmoulage ou une pièce (joint, cadre) collée, une pièce avec un support de fixation (X) d'un élément de véhicule sur le vitrage ou du vitrage sur un élément de véhicule, le long d'au moins un bord d'injection voire d'au moins deux bords opposés du vitrage.

L'élément fonctionnel peut être un joint polymérique, de préférence en élastomère, notamment en TPE (pour thermoplastique élastomère), ou EPDM, épais de quelques mm (typiquement entre 2 et 15 mm).

Le joint peut être adhésivé pour son maintien. Le joint peut préférablement tenir simplement par pincement ou par chaussage ou par clipsage (2 demi-cadres par exemple). Le joint peut être monoface, biface, triface. Le joint peut former un cadre. Le joint peut être de toute forme : en L, en U... Le joint peut être démontable à tout moment. Il peut comporter par une ou plusieurs de lèvres mises en contrainte après fixation.

L'élément fonctionnel peut être métallique ou polymérique, polypropylène (PP), polyamide (PA66), polybutylène téréphtalate (PBT) ... chargé ou non de fibres de verre.

La ou les zones lumineuses, (notamment périphérique le long d'un bord du vitrage ou de bords opposés ou adjacents, en bande(s), encadrant le vitrage), on forme un éclairage interne d'ambiance, un éclairage interne de lecture par vitre latérale, toit ...), un affichage lumineux de signalisation interne et/ou externe.

La ou les zones lumineuses, notamment sont périphériques, en bande(s) encadrant le vitrage.

On ajuste l'extraction/la conversion des rayonnements (ainsi que le type et/ou la position et/ou le nombre des diodes) pour :
- un éclairage d'ambiance, de lecture, notamment visible à l'intérieur du véhicule,
- une signalisation lumineuse notamment visible à l'extérieur :
   - par activation de télécommande : détection du véhicule dans un parking ou autre, indicateur de (dé)verrouillage de portes, ou
   - signalisation de sécurité, par exemple comme feux stop sur l'arrière,
- un éclairage sensiblement homogène sur toute la surface d'extraction (une ou plusieurs zones d'extraction, fonction commune ou distincte).

La lumière peut être :
- continue et/ou par intermittence,
- monochromatique et/ou plurichromatique.

Visible à l'intérieur du véhicule, elle peut ainsi avoir une fonction d'éclairage de nuit ou d'affichage d'informations de toutes natures, de type dessin, logo, signalisation alphanumérique ou autres signalétiques.

Comme motifs décoratifs, on peut former par exemple une ou des bandes lumineuses, un cadre lumineux périphérique.

On peut réaliser une seule face d'extraction (interne au véhicule de préférence).

L'insertion de diodes dans ces vitrages permet d'autres fonctionnalités de signalisation suivantes :
- affichage de témoins lumineux de signalisation destinés au chauffeur du véhicule ou aux passagers (exemple : témoin d'alarme de température du moteur dans le pare-brise automobile, témoin de mise en fonctionnement du système de dégivrage électrique, des vitres...),
- affichage de témoins lumineux de signalisation destinés aux personnes à l'extérieur du véhicule (exemple : témoin de mise en fonctionnement de l'alarme du véhicule dans les vitres latérales),
- affichage lumineux sur les vitrages des véhicules (par exemple affichage lumineux clignotant sur les véhicules de secours, affichage de sécurité avec faible consommation électrique signalant la présence d'un véhicule en danger).

Le vitrage peut comprendre une diode réceptrice de signaux de commande, notamment dans l'infrarouge, pour télécommander les diodes.

Le vitrage est destiné à équiper tout véhicule :
- vitre latérale d'un véhicule terrestre, notamment automobile, véhicule utilitaire, camion, train, notamment avec l'élément fonctionnel qui est une pièce de maintien d'un système de lève-vitre ou avec le capot enjoliveur,
- toit mobile ou fixe d'un véhicule terrestre, notamment automobile, véhicule utilitaire, camion, train, avec une première feuille éventuellement galbée, notamment un vitrage feuilleté,
- pare brise d'un véhicule terrestre, notamment automobile, véhicule utilitaire, camion, train, notamment avec la ou les zones lumineuses (formant une signalisation HUD par exemple) dans le cadre en émail ou à proximité, lunette arrière notamment dans le cadre en émail ou à proximité,
- hublot, pare-brise d'un véhicule aérien,
- vitres de fenêtre, toit, d'un véhicule aquatique, bateau, sous marin
- double ou triple vitrage dans un train, un bus.

Naturellement l'invention porte aussi sur un véhicule incorporant le vitrage défini précédemment.

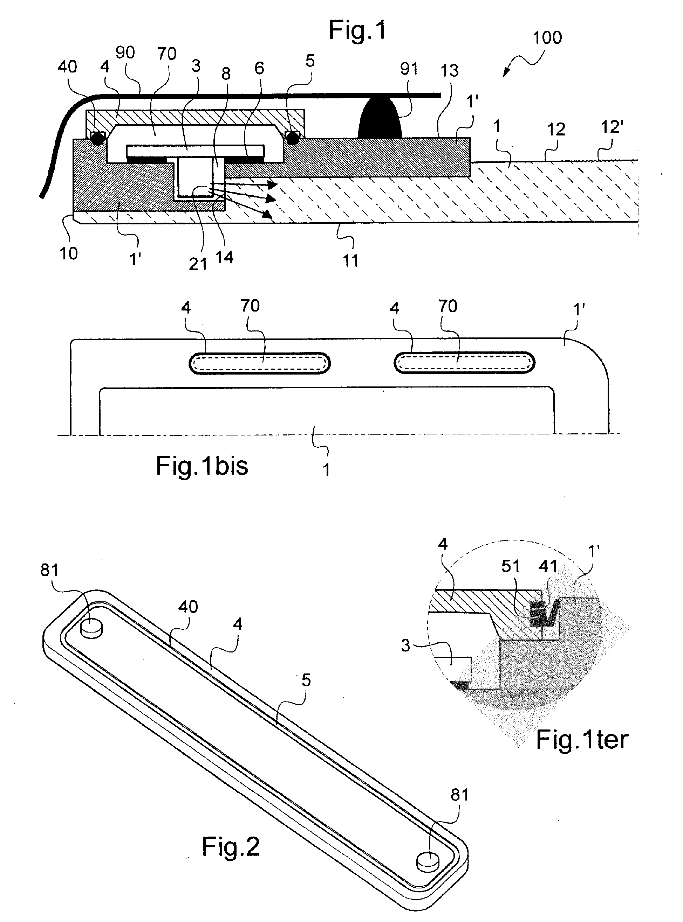

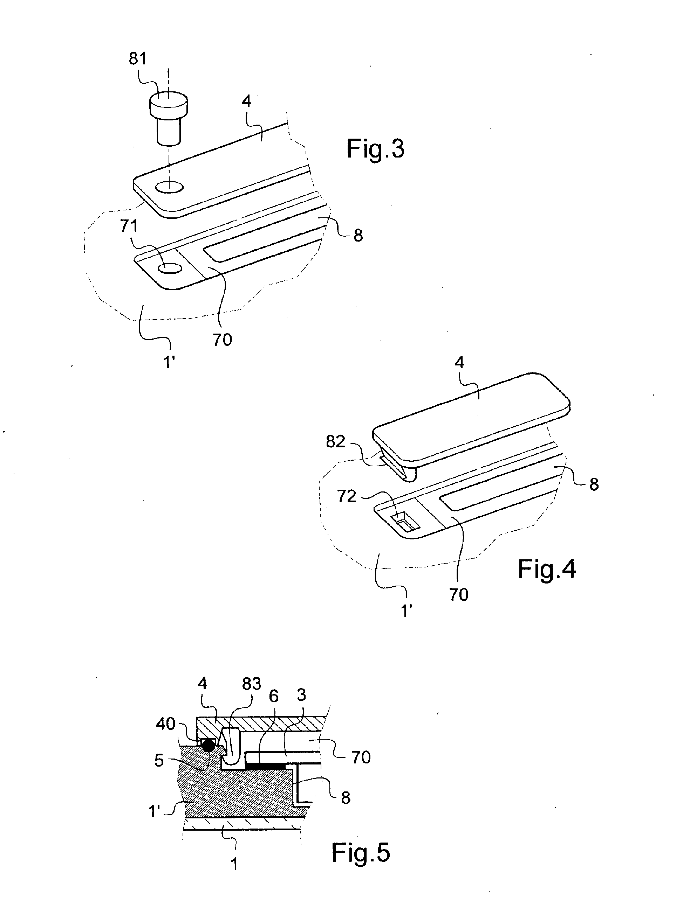

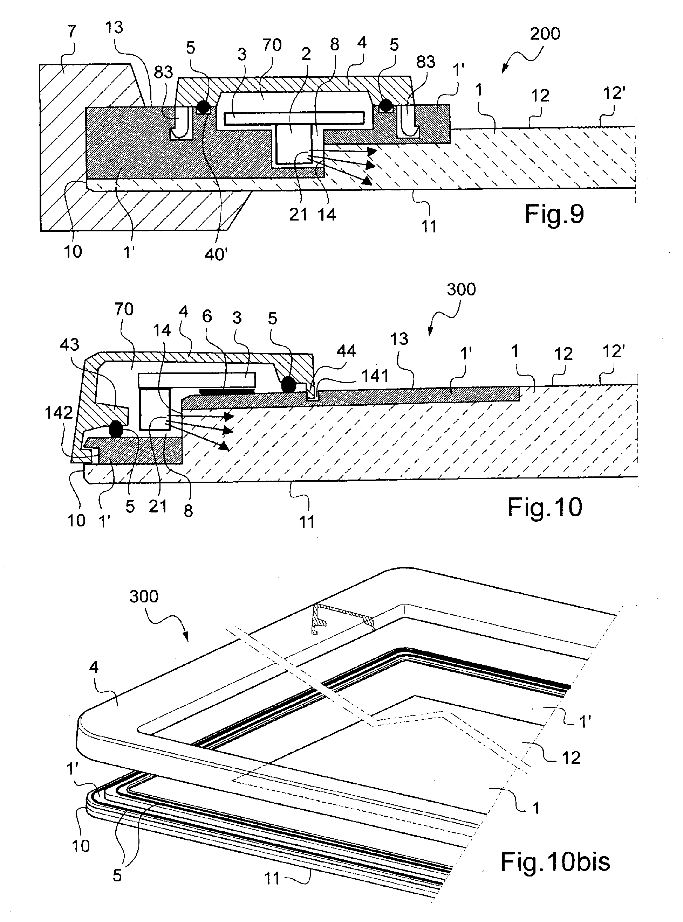

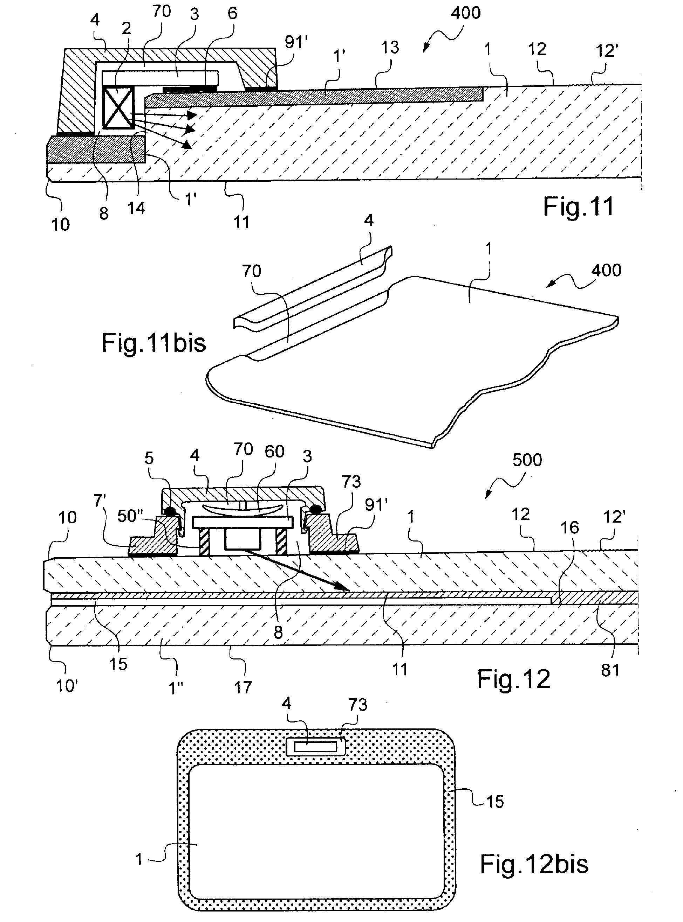

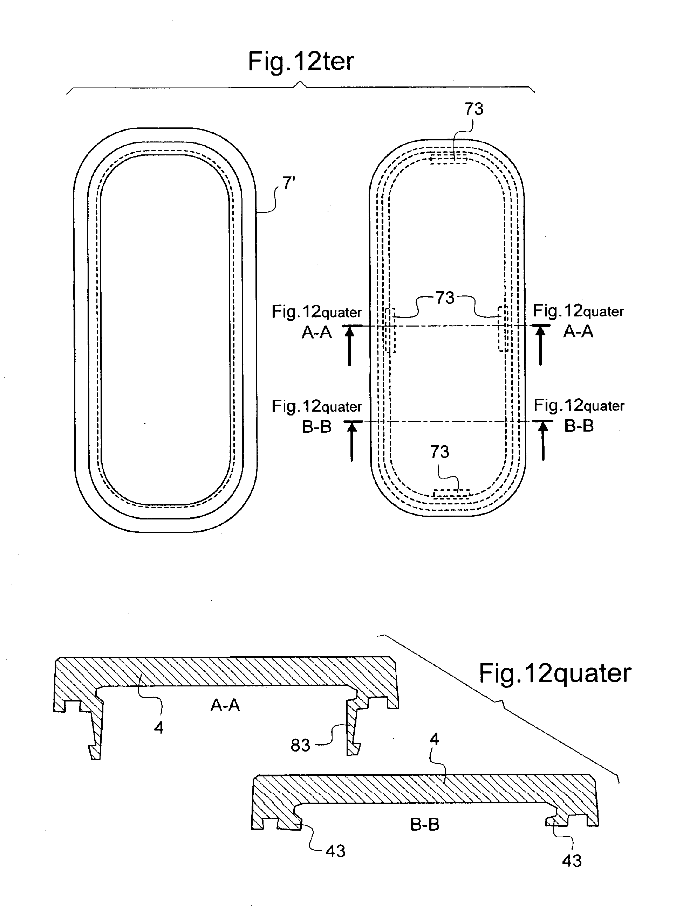

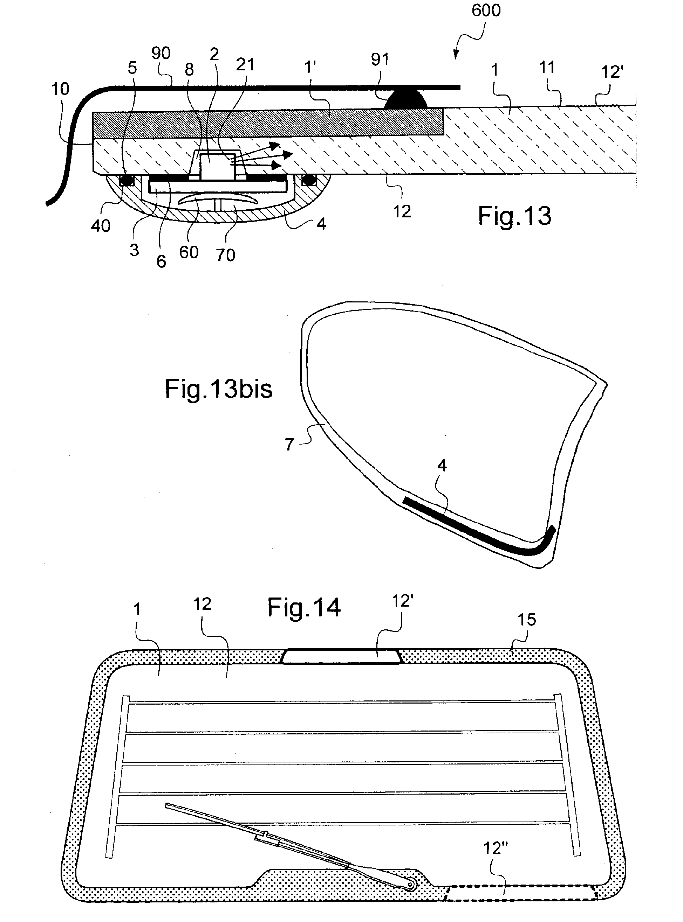

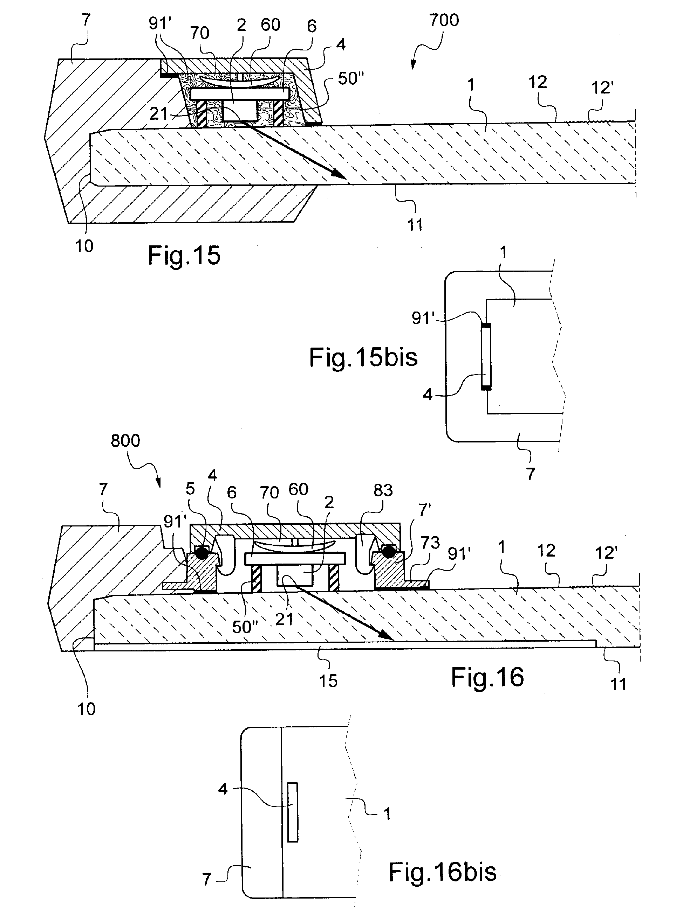

D'autres détails et caractéristiques avantageuses de l'invention apparaissent à la lecture des exemples de vitrages selon l'invention illustrés par les figures suivantes :
▪ Les figures 1, 9, 10, 11, 12, 13, 15, 16 représentent des vues schématiques partielles de coupe transversale des vitrages lumineux de véhicule dans différents modes de réalisation de l'invention,
▪ La figure 1bis représente une vue schématiques partielle de dessus du vitrage lumineux de véhicule du mode de réalisation de l'invention de la figure 1,
▪ La figure 1ter représente une vue schématiques partielle de coupe du vitrage lumineux de véhicule dans une variante du mode de réalisation de l'invention de la figure 1,
▪ Les figures 2 et 7 représentent chacune une vue schématique de dessous de capots selon l'invention,
▪ Les figures 3, 4 représentent des vues schématiques partielles, en élévation des moyens de fixation et d'un capot selon l'invention,
▪ La figure 5 représente une vue schématique partielle, de coupe des moyens de fixation et d'un capot selon l'invention,
▪ Les figures 6 et 8 représentent chacune une vue schématique de coupe des capots selon l'invention,
▪ La figure 10bis représente une vue schématique en élévation du vitrage lumineux de véhicule dans le mode de réalisation de l'invention de la figure 10.
▪ La figure 11bis représente une vue schématique en élévation du vitrage lumineux de véhicule dans le mode de réalisation de l'invention de la figure 11.
▪ La figure 12bis représente une vue schématique de dessus du vitrage lumineux de véhicule dans le mode de réalisation de l'invention de la figure 12.
▪ La figure 12ter représente une vue schématique partielle de dessus de la pièce de liaison utilisée dans le mode de réalisation de la figure 14,
▪ La figures 12quater représentent une vue de coupe transversale de la pièce de liaison du mode de réalisation de la figure 12,
▪ La figure 14 représente une vue schématique de face du vitrage lumineux de véhicule.
▪ La figure 15bis représente une vue schématique de dessus du vitrage lumineux de véhicule dans le mode de réalisation de l'invention de la figure 15.
▪ La figure 16bis représente une vue schématique de dessus du vitrage lumineux de véhicule dans le mode de réalisation de l'invention de la figure 16.

On précise que pour un souci de clarté les différents éléments des objets représentés ne sont pas nécessairement reproduits à l'échelle.

La figure 1 représente une vue schématique partielle de coupe d'un vitrage lumineux de véhicule 100 dans un premier mode de réalisation de l'invention.

Ce vitrage 100 est un vitrage comportant une première feuille transparente 1, en verre organique, par exemple rectangulaire, présentant une première face principale 11 et une deuxième face principale 12, et une tranche 10, par exemple une feuille polycarbonate bimatière transparente et opaque

Deux profilés 3 support de diodes électroluminescentes 2 s'étendent en bordure par exemple longitudinale et sont fixés en périphérie de la deuxième face 12 de la première feuille de verre 1 par un collage 6 ou un adhésif double face.

Chaque profilé support 3 est monolithique, mince, d'épaisseur égale à 0,6 mm (5 mm max de préférence), large de 7mm, long de 20 cm. Il peut être de section rectangulaire, métallique ou un PCB classique. La longueur d'appui du profilé sur la deuxième face 12 peut être typiquement inférieure à 7 mm.

En variante, le profilé support de diodes a une section en L, U, J...

Plus précisément, les diodes sont dans un trou 8 (rainure) pratiqué dans la zone opaque 1' de la première feuille (1) sur la périphérie de la deuxième face (12) et le profilé support 3 est en appui dans un évidement 70 plus large que la rainure.

La zone opaque forme un masquage de la source 2, en s'étendant sur la deuxième face masque d'éventuelle lumière parasite, notamment à proximité du bord d'injection 14, et/ou forme un masquage de la fixation 91 du vitrage à la carrosserie 90 du véhicule par la deuxième face 12,

Les diodes électroluminescentes comportant chacune une puce émettrice 2 apte à émettre un ou plusieurs rayonnements dans le visible guidé(s) dans la première feuille 1. Les diodes sont de petites tailles typiquement quelques mm ou moins, notamment de l'ordre de 2x2x1 mm, sans optique (lentille) et de préférence non pré-encapsulées pour réduire au maximum l'encombrement.

Dans la configuration illustrée, la face émettrice 21 est latérale (normale au profilé 3). On réduit au maximum la distance entre la face émettrice latérale et le bord d'injection 14, par exemple de 5 mm. La distance entre la face émettrice latérale et la tranche est de 1 à 2 mm. La direction principale d'émission est perpendiculaire à la face de la puce semi-conductrice, par exemple avec une couche active à multi puits quantique, de technologie AlInGaP ou autres semi-conducteurs. Le cône de lumière est un cône de type lambertien, de +/-60°.

L'extraction de la lumière 12' peut se faire via la deuxième face 12 qui est par exemple - la face intérieure au véhicule notamment dans le cas d'un toit.

L'extraction 12' est réalisée par tout moyen de diffusion à la surface de la deuxième face 12: sablage, attaque acide, couche diffusante, sérigraphie... ou en variante par gravure laser dans la première feuille 1.

Pour un groupe de diodes donné, on définit un espace des rayonnements émis entre chaque diode (puce) et le bord d'injection de la première feuille, dit espace de couplage optique, de préférence qui est un milieu gazeux, typiquement de l'air.

Chaque puce et l'espace des rayonnements émis doivent être protégés de toute pollution : eau, chimique etc, ceci à long terme comme pendant la fabrication du vitrage 100.

Pour garantir l'étanchéité aux fluides de chaque puce, de chaque barrette de diodes, on utilise :
- un capot (4) de couverture des diodes (par exemple un capot par barrette), le capot facial ayant une face générale dite interne orientée vers la première feuille,
- un élément interfacial 5 pour l'étanchéité interfaciale au(x) fluide(s), agencé entre la face interne du capot et la deuxième face 12 à proximité de l'évidement 70, qui est un joint d'étanchéité, en EPDM, en forme de cordon large de 5 mm, dans une rainure 40 sur la face interne du capot, ou en variante sur la première feuille

Le capot est une pièce plastique de forme générale plane, de contour rectangulaire (avec des bords éventuellement arrondis) comme illustré en figure 2 ou en figure 7. Le capot est parallèle à la première feuille.

Comme illustré en figures 2 et 3 ; le capot est solidaire de la première feuille 1, par des moyens de fixation réversibles par exemple deux vis 81, traversant le capot et dépassant de la face interne,

Ces vis sont reçues dans des zones d'accueil de la première feuille 1, à savoir des trous filetés 71 et de préférence entre le cordon de joint et le bord de l'évidement 70.

L'élément d'étanchéité interfacial 5 est une matière comprimée, l'étanchéité par compression de la matière étant réalisée par un effort de fermeture desdits moyens de fixation du capot 81.

Le capot est ainsi facilement démontable pour insérer des diodes ou les changer.

En première variante de capot, montré en figure 4, les moyens de fixation du capot sont deux moyens de clipsage 82 reçus dans des zones d'accueil 72, de préférence entre le cordon de joint et le bord de l'évidement.

En autre variante de capot, montré en figure 5, les moyens de fixation du capot sont deux moyens de clipsage 83 reçus dans des bords internes délimitant l'évidement 70.

Dans une variante de capot (alternative ou cumulative) présentée en figures 6 et 7, le profilé support 3 de led 2 est tenu par le capot par exemple par des crochets 50'.

Le design du capot permet ainsi l'intégration de la barrette de diodes et permet également la focalisation de la barrette c'est à dire le bon positionnement de la barrette par rapport à la tranche d'injection.

Le capot peut comporter en outre des surfaces ou butées pour la référence dans le logement du surmoulage

En outre le capot est pourvu d'un évidement 50 (rendu étanche par mousse ou joint d'étanchéité ...) pour le passage de la connectique....

Dans une troisième variante de capot (alternative à la deuxième variante) présentée en figure 8, la face interne est pourvue d'un moyen de positionnement (précis) / d'alignement 60 du profilé (3) support des diodes, sous forme d'un poussoir (forme concave vers l'opposé de la feuille 1) appuyant sur la face la plus externe du profilé.

Le design du capot 4 comporte donc un élément 60 permettant d'exercer un effort sur la barrette de diodes préalablement fixée à la feuille.

On peut choisir des diodes émettant en lumière blanche ou colorée pour un éclairage d'ambiance, de lecture...

On peut bien sûr prévoir plusieurs supports sur des bords distincts, et/ou avec des fonctions distinctes (choix adapté de la puissance, de la lumière émise, de la position et de l'étendue des zones extraction).

L'extraction par exemple une couche diffusante 12' peut former un éclairage d'ambiance.

Le vitrage 100 peut former par exemple un toit panoramique fixe de véhicule terrestre, ou en variante de bateau... Le toit est monté par l'extérieur, sur la carrosserie 90 via un adhésif 91

La première feuille est du côté intérieur du véhicule. L'extraction est de préférence par la face 12.

La figure 1ter représente une vue schématiques partielle de coupe du vitrage lumineux de véhicule dans une variante du mode de réalisation de l'invention de la figure 1,

Le vitrage lumineux de véhicule diffère du vitrage 100 par la position et le type d'élément d'étanchéité interfacial.

En effet, il s'agit d'un joint d'étanchéité 51, en caoutchouc élastomère ou TPE; dans une rainure 41 ménagée sur le coté externe du capot 4 et en contact avec un bord de l'évidement 70.

Les bords de la face interne sont en simple appui sur la première feuille 1" dans la zone opaque.

La figure 9 représente une vue schématique partielle de coupe transversale d'un vitrage lumineux de véhicule 200 ans un deuxième mode de réalisation de l'invention.

Le vitrage lumineux de véhicule 200 diffère du vitrage 100 d'abord par la disposition des moyens de fixation 83 qui sont des moyens de clippage reçues dans la première feuille à l'extérieur de l'évidement 70 et de l'élément d'étanchéité interfacial 5.

Par exemple, on pourvoit le vitrage d'un surmoulage polymérique 7, épais de 2,5 mm environ, en bordure du vitrage, et de préférence sur tout le pourtour du vitrage et d'au moins la deuxième face 12.

Le surmoulage 7 sert classiquement de bonne finition esthétique et permet d'intégrer d'autres éléments ou fonctions (inserts de renforcement...).

Le surmoulage 7 par exemple présente une lèvre d'étanchéité entre le vitrage et le véhicule

Le surmoulage 7 est par exemple en polyuréthane noir, notamment en PU-RIM (reaction in mold en anglais).

La figure 10 représente une vue schématique partielle de coupe transversale vitrage lumineux de véhicule 300 dans un troisième mode de réalisation de l'invention.
Le vitrage lumineux de véhicule 300 diffère du vitrage 100 :
- par l'étendue de l'évidement 70 allant jusqu'à la tranche 10 et en outre étant sur le pourtour de la première feuille comme montré en figure 10bis
- par l'usage d'un double cordon d'étanchéité 5 (zone évidée basse et zone non évidée haute de la deuxième face 12
- les moyens de fixation sont réversibles comprenant des moyens de clipsage avec
- un premier ergot 44 dans une première rainure d'accueil 141 sur la deuxième face principale,
- et un deuxième ergot dans une deuxième rainure d'accueil 142 sur la tranche.

La figure 11 représente une vue schématique partielle de coupe transversale d'un vitrage lumineux de véhicule 400 dans un quatrième mode de réalisation de l'invention dans une variante du vitrage 300.

On remplace le double cordon d'étanchéité par de la colle 91' réversible et le capot repose sur la partie évidée. L'évidement 70 est partiel comme montré en figure 11bis. On peut choisir de boucher les extrémités latérales par la colle de préférence réversible.

La figure 12 représente une vue schématique partielle de coupe transversale d'un vitrage lumineux de véhicule 500 dans un cinquième mode de réalisation de l'invention.

Le vitrage lumineux de véhicule 500 diffère du vitrage 100 par le choix d'un vitrage feuilleté
- avec la première feuille de verre silicosodocalcique, d'épaisseur égale à 2,1 mm,
- une deuxième feuille de verre 17, éventuellement pour une fonction de contrôle solaire, teintée (verre VENUS VG10 par exemple) et/ou recouverte d'un revêtement de contrôle solaire, d'épaisseur égale à 2,1 mm.

La deuxième feuille de verre est feuilletée 1' par un intercalaire de feuilletage 8, par exemple un PVB 81 d'épaisseur 0,76 mm.

Pour masquer la source, voire supprimer la lumière parasite sortante par la feuille 17 on peut utiliser un élément de masquage périphérique 15 sur la face 13 par exemple un émail opaque (noir...) et/ou un réflecteur (argenture etc) formant par exemple un cadre comme montré en figure 12bis.

Cet élément de masquage périphérique 15 peut aussi servir pour masquer la fixation à la carrosserie.

Le capot 4, fixé indirectement à la deuxième face 12, est fixé sur une pièce de liaison 7' sous forme d'un cadre posé sur la première feuille 1, par exemple ovale. La première face n'a pas d'évidement

Le joint d'étanchéité interfacial 5 est agencé entre la face interne du capot et la face libre externe de la pièce de liaison 7' en matière PP, PA66, ou PBT.

Les moyens de fixation réversibles du capot sont des moyens de clippage par exemple ponctuels et agencés sur la face interne du capot, par exemple quatre ergot(s) de clipsage 83 faisant partie intégrante du capot (cf figure 12quater). La face interne du capot présente donc des zones 43 sans ergots. On emploie de préférence des butées 50" pour bien protéger ou positionner la diode 3.

Les moyens de clipsage 83 sont clipsés sur l'intérieur de la pièce de liaison 7',ou en variante sur l'extérieur.

En variante la pièce de liaison est collée sur la première feuille (et/ou sur le surmoulage).

La figure 13 représente une vue schématique partielle de coupe transversale d'un vitrage lumineux de véhicule 600 dans un sixième mode de réalisation de l'invention

Le vitrage 600 diffère du vitrage 100 par
- sa fixation à la carrosserie 90 par la colle 91 est sur la première face 11
- la deuxième face 12 est la face externe du véhicule
- l'évidement 70 est une simple rainure 8 et la zone opaque est en face 11 seulement

Il s'agit par exemple d'une vitre latérale notamment d'automobile comme montré en figure 13bis

Ici le capot est visible est sert aussi de pièce d'aspect, d'enjoliveur, avec une forme courbée par exemple

La figure 14 représente une vue schématique partielle dessus transversale d'un vitrage lumineux de véhicule 700

Il s'agit par exemple d'une lunette arrière de véhicule
- avec une zone lumineuse 12' sur la face externe 11, donc vue de l'extérieur (moyen de repérage du véhicule, feux stop..).
- avec une zone lumineuse 12" sur la face interne 12, donc pour l'intérieur.

La figure 15 représente une vue schématique partielle de coupe transversale d'un vitrage lumineux de véhicule 700 dans un septième mode de réalisation de l'invention

Il n'y a pas d'évidement de la première feuille le capot est angulaire repose d'un coté sur un surmoulage périphérique 7 triface et sur la deuxième face 12. L'étanchéité et la fixation du capot est faite par colle de préférence réversible et placer entre aux extrémités comme montré en figure 15bis.

La figure 16 représente une vue schématique partielle de coupe transversale d'un vitrage lumineux de véhicule 800 dans un huitième mode de réalisation de l'invention

Le vitrage 12 diffère du vitrage 500 par le fait que la pièce de liaison est en partie lié au surmoulage (prise ans le surmoulage) périphérique, qui peut être triface, et par la position des moyens de clipsage plus interne

En variante _on remplace les diodes par une fibre optique avec une face émettrice latérale fibre posée (calée), par exemple par un profilé support sur la deuxième face La source primaire de lumière peut être une diode (non représentée). On utilise par exemple la fibre optique de 3M dite 3M™ Precision Lighting Elements.

En variante on choisit des LED UV, notamment dans l'UVA, pour exciter des luminophores sur la face 12 par exemple de préférence pour une feuille de verre.

## Revendications

1. Vitrage lumineux de véhicule (100, 200, 300, 400, 500, 600, 700, 800) comportant :
- une première feuille en verre minéral ou organique (1) présentant une première face principale (11) et une deuxième face principale (12) et une tranche (10),
- une source lumineuse périphérique (2, 2', 20) avec une face émettrice (21, 21'), choisie parmi une fibre optique (20) et des diodes électroluminescentes (2, 2') comportant chacune une puce semi-conductrice sur un profilé support des diodes (3), la face émettrice étant en regard d'un bord de la deuxième face (12) dit d'injection pour une propagation de la lumière injectée visible et/ou ultraviolet dit UV dans l'épaisseur de la première feuille, la première feuille (1) jouant alors le rôle de guide de la lumière injectée, le bord d'injection éventuellement étant en partie évidé voire avec un décrochement),
- pour former au moins une zone lumineuse :
- des moyens d'extraction de la lumière guidée via la première et/ou la deuxième face principale, qui sont des moyens de diffusion en surface de la première et/ou de la deuxième face principale (12') ou des moyens de diffusion en volume dans la première feuille,
- et/ou lorsque la lumière injectée est UV, des moyens de conversion de la lumière UV en lumière visible via la première et/ou la deuxième face principale, qui sont des luminophores notamment sur la première et/ou de la deuxième face principale
- un éventuel élément fonctionnel périphérique rapporté (7), lié à la première feuille, qui est étanche au(x) fluide(s), notamment un élément fonctionnel qui est choisi parmi un surmoulage ou un élément prémonté,
- un capot de couverture (4) de la source (2, 2', 20), étanche au(x) fluide(s), notamment à l'eau liquide voire vapeur,
- le capot (4) dit facial, c'est à dire essentiellement en regard de la deuxième face, solidaire par des moyens de fixation (81, 82, 83, 86)
- à la première feuille, notamment en verre organique
- et/ou à une pièce de liaison (7') liée à la première feuille,
- et éventuellement à l'élément fonctionnel
le capot ayant une face générale dite interne orientée vers la deuxième face le capot étant associé à un élément interfacial (5, 51, 5'), pour l'étanchéité interfaciale au(x) fluide(s), notamment à l'eau liquide voire vapeur qui est agencé entre le capot et la pièce de liaison et éventuellement entre le capot et l'élément fonctionnel ou intégré au capot, ou intégré à la pièce de liaison ou intégré à la première feuille.

2. Vitrage lumineux de véhicule (100, 200, 300, 400, 600) selon la revendication 1 **caractérisé en ce que** la première feuille (1) est en verre notamment organique, notamment en PC, avec un trou (70, 8) borgne dans son épaisseur, de la deuxième face (12), par exemple un décrochement, pour loger la source en regard du bord d'injection (14)

3. Vitrage lumineux de véhicule (300) selon la revendication précédente **caractérisé en ce que** le trou (70, 8) est sur tout le pourtour de la deuxième face (12) et le capot (4) forme un cadre notamment intégrant lesdits moyens de fixation.

4. Vitrage lumineux de véhicule (200, 500, 700, 800) selon l'une des revendications précédentes **caractérisé en ce que** le vitrage comprend un élément de masquage de la source et d'éventuelle lumière parasite, et/ou de masquage de la fixation (91) du vitrage à la carrosserie (90) du véhicule par la deuxième face (12), l'élément de masquage pouvant être
- un partie d'élément fonctionnel (7), notamment une encapsulation polymérique,
- et/ou un émail suffisamment opaque (15), sur la périphérie de la deuxième face et/ou sur la première face ou une face d'un film en feuille rapporté en regard de la première face notamment lorsque l'élément fonctionnel est monoface ou biface,
- et/ou une surface réfléchissante (15) sur la périphérie de la deuxième face et/ou sur la première face ou une face rapportée en regard de la première face.

5. Vitrage lumineux de véhicule (100, 200, 300, 400, 600) selon l'une des revendications précédentes **caractérisé en ce que** la première feuille est organique, bimatière transparente et opaque et la zone opaque (1') de la première feuille (1), sur la périphérie de la deuxième face (12) et/ou sur la première face, forme un masquage de la source et d'éventuelle lumière parasite, et/ou forme un masquage de la fixation (91) du vitrage à la carrosserie (90) du véhicule par la deuxième face (12),

6. Vitrage lumineux de véhicule (100, 200, 300, 400, 500, 600, 700, 800) selon l'une des revendications précédentes **caractérisé en ce que** l'espace des rayonnements émis avant injection, dit espace de couplage est gazeux, local, est en périphérie de la face interne du capot (4) ou sur un côté du capot (4), notamment l'élément d'étanchéité interfaciale au(x) fluide(s) forme un cordon (5, 51, 91').

7. Vitrage lumineux de véhicule (100, 200, 300, 400, 500, 600, 700, 800) selon l'une des revendications précédentes **caractérisé en ce que** la fixation de la source (2, 2', 20) au vitrage est réalisé en dehors de l'espace de couplage, notamment en dehors du bord d'injection et pour les diodes par la fixation du profilé support (3), notamment par collage ou adhésif double face ou clipsage sur l'une des faces de la première feuille (11, 12), notamment la deuxième face (12), ou sur la face interne du capot (4).

8. Vitrage lumineux de véhicule (700) selon l'une des revendications précédentes **caractérisé en ce que** l'élément d'étanchéité interfacial (5'),de préférence en périphérie du capot (4), est une colle réversible faisant partie ou constituant lesdits moyens de fixation du capot (4) alors réversibles, de préférence un cordon de colle (5') arrangé en cordon notamment en contact avec la face interne du capot ou la pièce de liaison (par sa face libre externe) ou la deuxième face, notamment colle de type époxy bi-composant

9. Vitrage lumineux de véhicule (100, 200, 300, 400, 600, 800) selon l'une des revendications 1 à 6 **caractérisé en ce que** l'élément d'étanchéité interfacial, de préférence en périphérie du capot (4), est une matière comprimée (5, 51, 52), l'étanchéité par compression de la matière étant réalisée par un effort de fermeture desdits moyens de fixation du capot, notamment l'élément d'étanchéité interfacial est choisi parmi :
- un joint (5, 51) polymérique par exemple en TPE, en EPDM notamment un joint torique, à lèvre(s) d'étanchéité,
- un profil d'étanchéité (52) sur la pièce de liaison choisie polymérique, par exemple lèvre(s), ou sur le capot;
- une mousse éventuellement adhésivée notamment mousse acrylique, PU, caoutchouc (EDPM..), thermoplastiques élastomères, en TPE, en polyester, notamment en polyester caoutchouc monocomposant.

10. Vitrage lumineux de véhicule (100, 200, 300, 500, 600, 700, 800) selon l'une des revendications précédentes **caractérisé en ce que** les moyens de fixation (81, 82) sont réversibles, les moyens de fixation sont choisis parmi :
- des moyens de clipsage (82), agencés sur le capot, et notamment reçus pour le clipsage dans une ou des zones d'accueil (72) dans la première feuille notamment organique, et/ou de la pièce de liaison et éventuellement reçus en outre dans l'élément fonctionnel ;
- des moyens de clipsage, notamment de type crochet, faisant partie intégrante du capot, de préférence en dehors dans la zone d'étanchéité et notamment reçus dans une ou des zones d'accueil de la première feuille notamment organique, et/ou de la pièce de liaison et éventuellement reçus en outre dans l'élément fonctionnel (7) ;
- des moyens de vissage (81)

11. Vitrage lumineux de véhicule (500, 800) selon l'une des revendications précédentes **caractérisé en ce que** la pièce de liaison (7') forme de préférence une pièce évidée monoface à contour fermé tel qu'un cadre.

12. Vitrage lumineux de véhicule (100, 200, 300, 400, 500, 600, 700, 800) selon l'une des revendications précédentes **caractérisé en ce que** le capot (4) est un enjoliveur, ou le capot est masqué après fixation du vitrage à la carrosserie, capot par exemple le long de bord(s) ou formant un cadre.

13. Vitrage lumineux de véhicule selon l'une des revendications précédentes **caractérisé en ce que** le capot (4) comprend des moyens de maintien (50') dudit profilé (3) et/ou un évidement(50) pour le passage de la connectique et/ou des moyens de positionnement (60) du profilé support des diodes (3).

14. Vitrage lumineux de véhicule (100, 200, 300, 400, 600, 700, 800) selon l'une des revendications précédentes **caractérisé en ce que** le vitrage est simple, la première feuille (1) étant en verre minéral ou organique, notamment en PC, PMMA, PU, éventuellement bimatière (1").

15. Vitrage lumineux de véhicule (500) selon l'une des revendications 1 à 13 **caractérisé en ce qu'**une deuxième feuille (1'), notamment en verre minéral ou organique est feuilletée par un intercalaire de feuilletage à la première feuille et de préférence la tranche de la première feuille comporte un évidement marginal traversant où est logée la source , ou la deuxième feuille est dépassante du bord d'injection de la première feuille, créant un décrochement latéral du vitrage.

16. Vitrage lumineux de véhicule (500) selon l'une des revendications 1 à 13 **caractérisé en ce que** le vitrage est un vitrage multiple, notamment un vitrage feuilleté, un double vitrage sous vide ou isolant, ou encore un triple vitrage.

17. Vitrage lumineux de véhicule (200, 700, 800) selon l'une des revendications précédentes **caractérisé en ce que** l'élément fonctionnel est surmoulé, polymérique, (7) et **en ce que** le vitrage comporte de préférence entre l'encapsulation et le vitrage, notamment en verre minéral, une couche de primaire, mono, bi ou tri-composants, par exemple à base de polyuréthane, polyester, polyvinyle acétate, isocyanate.

18. Vitrage lumineux de véhicule (100, 200, 300, 400, 500, 600, 700, 800) selon l'une des revendications précédentes **caractérisé en ce que** dans la ou les zones lumineuses, on forme un éclairage interne d'ambiance, un éclairage interne de lecture, un affichage lumineux de signalisation interne et/ou externe.

19. Vitrage lumineux de véhicule (100, 200, 300, 400, 500, 600, 700, 800) selon l'une des revendications précédentes le vitrage étant choisi parmi :
- vitre latérale d'un véhicule terrestre, notamment automobile, véhicule utilitaire, camion, train, notamment avec l'élément fonctionnel qui est une pièce de maintien d'un système de lève-vitre ou avec le capot enjoliveur,
- toit mobile ou fixe d'un véhicule terrestre, notamment automobile, véhicule utilitaire, camion, train, avec une première feuille éventuellement galbée, notamment un vitrage feuilleté,
- pare brise d'un véhicule terrestre, notamment automobile, véhicule utilitaire, camion, train, notamment avec la ou les zones lumineuses (formant une signalisation HUD par exemple) dans le cadre en émail ou à proximité, lunette arrière notamment dans le cadre en émail ou à proximité,
- hublot, pare-brise d'un véhicule aérien,
- vitres de fenêtre, toit, d'un véhicule aquatique, bateau, sous marin
- double ou triple vitrage dans un train, un bus.

20. Véhicule incorporant le vitrage lumineux de véhicule (100, 200, 300, 400, 500, 600, 700, 800) selon l'une des revendications précédentes.

## Patentansprüche

1. Leuchtende Fahrzeugverglasung (100, 200, 300, 400, 500, 600, 700, 800), die Folgendes aufweist:
- eine erste Scheibe aus mineralischem oder organischem Glas (1), die eine erste Hauptseite (11) und eine zweite Hauptseite (12) und einen Rand (10) aufweist,
- eine umfangsseitige Lichtquelle (2, 2', 20) mit einer emittierenden Seite (21, 21'), die ausgewählt ist aus einem Lichtwellenleiter (20) und Leuchtdioden (2, 2'), die jeweils einen Halbleiterchip an einem Tragprofil der Dioden (3) aufweisen, wobei sich die emittierende Seite gegenüber einem so genannten Einspeisungsrand der zweiten Seite (12) befindet, für eine Ausbreitung des eingespeisten sichtbaren Lichts und/oder ultravioletten, so genannten UV-Lichts in der Dicke der ersten Scheibe, wobei die erste Scheibe (1) nun die Funktion der Leitung des eingespeisten Lichts übernimmt, wobei der Einspeisungsrand teilweise ausgespart oder sogar mit einer Ausbuchtung versehen ist,
- um wenigstens einen Leuchtbereich zu bilden:
- Mittel zur Extraktion des über die erste und/oder die zweite Hauptseite geleiteten Lichts, die Oberflächendiffusionsmittel der ersten und/oder der zweiten Hauptseite (**12'**) oder Volumendiffusionsmittel in der ersten Scheibe sind,
- und/oder, wenn das eingespeiste Licht UV-Licht ist, Mittel zur Umwandlung des UV-Lichts in sichtbares Licht über die erste und/oder die zweite Hauptseite, die Leuchtstoffe insbesondere auf der ersten und/oder der zweiten Hauptseite sind,
- ein etwaiges angesetztes, mit der ersten Scheibe verbundenes umfangseitiges Funktionselement (7), das gegenüber Fluid(en) dicht ist, insbesondere ein Funktionselement, das aus einer Anformung oder einem vormontierten Element ausgewählt ist,
- eine Kappe zum Abdecken (4) der Quelle (2, 2', 20), die gegenüber Fluid(en), insbesondere gegenüber flüssigem Wasser oder sogar Dampf dicht ist,
- wobei die so genannte faziale Kappe (4), das heißt im Wesentlichen der zweiten Fläche gegenüberliegend, durch Befestigungsmittel (81, 82, 83, 86) fest verbunden ist mit
- der ersten Scheibe, insbesondere aus organischem Glas,
- und/oder einem Verbindungsteil (7'), das mit der ersten Scheibe verbunden ist,
- und eventuell dem Funktionselement,
wobei die Kappe eine Haupt-, so genannte Innenfläche hat, die der zweiten Seite zugewandt ist, wobei die Kappe einem Grenzflächenelement (5, 51, 5') für die Grenzflächendichtigkeit gegenüber Fluid(en), insbesondere gegenüber flüssigem Wasser oder sogar Dampf zugeordnet ist, das zwischen der Kappe und dem Verbindungsteil und eventuell zwischen der Kappe und dem Funktionselement angeordnet ist oder in das Verbindungsteil integriert oder in die erste Scheibe integriert ist.

2. Leuchtende Fahrzeugverglasung (100, 200, 300, 400, 600) nach Anspruch 1, **dadurch gekennzeichnet, dass** die erste Scheibe (1) aus insbesondere organischem Glas, insbesondere aus PC besteht, mit, in ihrer Dicke, einem Sackloch (70, 8) der zweiten Seite (12), zum Beispiel einer Ausbuchtung, für die Aufnahme der Quelle gegenüber dem Einspeisungsrand (14).

3. Leuchtende Fahrzeugverglasung (300) nach dem vorhergehenden Anspruch, **dadurch gekennzeichnet, dass** das Loch (70, 8) über den gesamten Umfang der zweiten Seite (12) verläuft und die Kappe (4) einen Rahmen, der insbesondere die Befestigungsmittel integriert, bildet.

4. Leuchtende Fahrzeugverglasung (200, 500, 700, 800) nach einem der vorhergehenden Ansprüche, **dadurch gekennzeichnet, dass** die Verglasung ein Element zum Abdecken der Quelle und von etwaigem Streulicht und/oder zum Abdecken der Befestigung (91) der Verglasung an der Karosserie (90) des Fahrzeugs über die zweite Seite (12) umfasst, wobei das Abdeckelement sein kann
- ein Teil des Funktionselements (7), insbesondere eine Polymereinkapselung,
- und/oder ein hinreichend opakes Email (15) am Umfang der zweiten Seite und/oder an der ersten Seite oder einer Seite eines gegenüber der ersten Seite angesetzten folienförmigen Films, insbesondere wenn das Funktionselement einseitig oder zweiseitig ist,
- und/oder eine reflektierende Oberfläche (15) am Umfang der zweiten Seite und/oder auf der ersten Seite oder einer gegenüber der ersten Seite angesetzten Seite.

5. Leuchtende Fahrzeugverglasung (100, 200, 300, 400, 600) nach einem der vorhergehenden Ansprüche, **dadurch gekennzeichnet, dass** die erste Scheibe organisch, aus zwei Materialien bestehend und opak ist und der opake Bereich (1') der ersten Scheibe (1) am Umfang der zweiten Seite (12) und/oder an der ersten Seite eine Abdeckung der Quelle und von möglichem Streulicht bildet, und/oder eine Abdeckung der Befestigung (91) der Verglasung an der Karosserie (90) des Fahrzeugs über die zweite Seite (12) bildet.

6. Leuchtende Fahrzeugverglasung (100, 200, 300, 400, 500, 600, 700, 800) nach einem der vorhergehenden Ansprüche, **dadurch gekennzeichnet, dass** der Raum der vor der Einspeisung ausgesandten Strahlungen, sogenannter Kopplungsraum, gasförmig, lokal ist und sich am Umfang der Innenfläche der Kappe (4) oder an einer Seite der Kappe (4) befindet, insbesondere das Element für die Grenzflächendichtigkeit gegenüber Fluid(en) einen Strang (5, 51, 91') bildet.

7. Leuchtende Fahrzeugverglasung (100, 200, 300, 400, 500, 600, 700, 800) nach einem der vorhergehenden Ansprüche, **dadurch gekennzeichnet, dass** die Befestigung der Quelle (2, 2', 20) an der Verglasung außerhalb des Kopplungsraums, insbesondere außerhalb des Einspeisungsrandes und für die Dioden durch die Befestigung des Tragprofils (3) erfolgt, insbesondere durch Kleben oder doppelseitiges Klebeband oder Festclipsen an einer der Seiten der ersten Scheibe (11, 12), insbesondere der zweiten Seite (12) oder an der Innenfläche der Kappe (4).

8. Leuchtende Fahrzeugverglasung (700) nach einem der vorhergehenden Ansprüche, **dadurch gekennzeichnet, dass** das Grenzflächendichtungselement (5'), vorzugsweise am Umfang der Kappe (4), ein reversibler Kleber ist, der Teil ist der oder die dann reversiblen Befestigungsmittel der Kappe (4) bildet, vorzugsweise einen Klebestrang (5'), der als Strang angeordnet insbesondere mit der Innenfläche der Kappe oder dem Verbindungsteil (über dessen freie Außenfläche) oder der zweiten Seite in Kontakt ist, insbesondere Kleber vom Typ Zweikomponenten-Epoxid.

9. Leuchtende Fahrzeugverglasung (100, 200, 300, 400, 600, 800) nach einem der Ansprüche 1 bis 6, **dadurch gekennzeichnet, dass** das Grenzflächendichtungselement (5'), vorzugsweise am Umfang der Kappe (4), ein komprimiertes Material (5, 51, 52) ist, wobei die Dichtigkeit durch Komprimieren des Materials mittels einer Schließkraft der Befestigungsmittel der Kappe hergestellt wird, insbesondere das Grenzflächendichtungselement ausgewählt ist aus:
- einer Polymerdichtung (5, 51), beispielsweise aus TPE, EPDM, insbesondere ein O-Ring, mit Dichtungslippe(n),
- ein als polymer gewähltes Dichtungsprofil (52) an dem Verbindungsteil, beispielsweise Lippe(n), oder an der Kappe;
- ein eventuell haftend gemachter Schaum, insbesondere Acrylschaum, PU, Kautschuk (EDPM...), thermoplastische Elastomere, aus TPE, aus Polyester, insbesondere aus Einkomponentenkautschuk-Polyester.

10. Leuchtende Fahrzeugverglasung (100, 200, 300, 500, 600, 700, 800) nach einem der vorhergehenden Ansprüche, **dadurch gekennzeichnet, dass** die Befestigungsmittel (81, 82) reversibel sind, die Befestigungsmittel ausgewählt sind aus:
- Festclipsmitteln (82), die an der Kappe angeordnet sind, und insbesondere für das Festclipsen in einem oder Aufnahmebereich(en) (72) in der insbesondere organischen ersten Scheibe und/oder des Verbindungsteils und eventuell ferner in dem Funktionselement aufgenommen sind,
- Festclipsmitteln, insbesondere des Hakentyps, die fester Bestandteil der Kappe sind; vorzugsweise außerhalb in dem Dichtungsbereich und insbesondere in einem oder Aufnahmebereich(en) der ersten insbesondere organischen Scheibe und/oder des Verbindungsteils und/oder ferner eventuell in dem Funktionselement (7) aufgenommen sind,
- Schraubmitteln (81).

11. Leuchtende Fahrzeugverglasung (500, 800) nach einem der vorhergehenden Ansprüche, **dadurch gekennzeichnet, dass** das Verbindungsteil (7') vorzugsweise ein ausgespartes einseitiges Teil mit geschlossener Kontur, wie einen Rahmen, bildet.

12. Leuchtende Fahrzeugverglasung (100, 200, 300, 400, 500, 600, 700, 800) nach einem der vorhergehenden Ansprüche, **dadurch gekennzeichnet, dass** die Kappe (4) eine Zierkappe ist oder die Kappe nach Befestigen der Verglasung an der Karosserie verdeckt ist, Kappe beispielsweise entlang eines Randes oder entlang von Rändern oder die einen Rahmen bildet.

13. Leuchtende Fahrzeugverglasung nach einem der vorhergehenden Ansprüche, **dadurch gekennzeichnet, dass** die Kappe (4) Mittel zum Halten (50') des Profils (3) und/oder eine Ausnehmung (50) für den Durchgang der Anschlüsse und/oder Mittel zur Positionierung (60) des Tragprofils der Dioden (3) umfasst.

14. Leuchtende Fahrzeugverglasung (100, 200, 300, 400, 600, 700, 800) nach einem der vorhergehenden Ansprüche, **dadurch gekennzeichnet, dass** die Verglasung einfach ist, wobei die erste Scheibe (1) aus mineralischem oder organischem Glas, insbesondere aus PC, PMMA, PU, eventuell aus zwei Materialien (1") besteht.

15. Leuchtende Fahrzeugverglasung (500) nach einem der Ansprüche 1 bis 13, **dadurch gekennzeichnet, dass** eine zweite Scheibe (1'), insbesondere aus mineralischem oder organischem Glas, mittels einer verbindenden Zwischenschicht mit der ersten Scheibe verbunden ist und vorzugsweise die Kante der ersten Scheibe eine durchgehende randseitige Ausnehmung umfasst, in der die Quelle aufgenommen ist, oder die zweite Scheibe über den Einspeisungsrand der ersten Scheibe hinausragt, wodurch ein seitlicher Absatz der Verglasung erzeugt wird.

16. Leuchtende Fahrzeugverglasung (500) nach einem der Ansprüche 1 bis 13, **dadurch gekennzeichnet, dass** die Verglasung eine Mehrfachverglasung, insbesondere eine Verbundverglasung, eine Vakuum- oder isolierende Doppelverglasung oder auch eine Dreifachverglasung ist.

17. Leuchtende Fahrzeugverglasung (200, 700, 800) nach einem der vorhergehenden Ansprüche, **dadurch gekennzeichnet, dass** das Funktionselement angeformt, polymer (7) ist und dass die Verglasung vorzugsweise zwischen der Einkapselung und der Verglasung, insbesondere aus mineralischem Glas, eine Ein-, Zwei- oder Dreikomponentengrundierungsschicht, beispielsweise auf der Basis von Polyurethan, Polyesster, Polyvinylacetat, Isocyanat umfasst.

18. Leuchtende Fahrzeugverglasung (100, 200, 300, 400, 500, 600, 700, 800) nach einem der vorhergehenden Ansprüche, **dadurch gekennzeichnet, dass** in dem oder in den Leuchtbereich(en) eine innere Raumbeleuchtung, eine Innenlesebeleuchtung, eine innere und/oder äußere leuchtende Signalanzeige gebildet wird.

19. Leuchtende Fahrzeugverglasung (100, 200, 300, 400, 500, 600, 700, 800) nach einem der vorhergehenden Ansprüche, wobei die Verglasung ausgewählt ist aus:
- Seitenscheibe eines Landfahrzeugs, insbesondere Kraftfahrzeugs, Nutzfahrzeugs, Lkw, Zuges, insbesondere mit dem Funktionselement, das ein Teil zum Halten eines Fensterhebersystems ist oder mit der Zierkappe,
- bewegliches oder festes Dach eines Landfahrzeugs, insbesondere Kraftfahrzeugs, Nutzfahrzeugs, Lkw, Zuges, mit einer eventuell gewölbten ersten Scheibe, insbesondere einer Verbundverglasung,
- Windschutzscheibe eines Landfahrzeugs, insbesondere Kraftfahrzeugs, Nutzfahrzeugs, Lkw, Zuges, insbesondere mit dem oder den Leuchtbereich(en) (beispielsweise eine HUD-Signalanzeige bildend) im Email-Rahmen oder in der Nähe, Heckscheibe, insbesondere im Email-Rahmen oder in der Nähe,
- Bullauge, Windschutzscheibe eines Luftfahrzeugs,
- Fensterscheiben, Dach, eines Wasserfahrzeugs, Schiffes, U-Bootes,
- Doppel- oder Dreifachverglasung in einem Zug, einem Bus.

20. Fahrzeug, in das die leuchtende Fahrzeugverglasung (100, 200, 300, 400, 500, 600, 700, 800) nach einem der vorhergehenden Ansprüche integriert ist.

## Claims

1. A luminous vehicle glazing (100, 200, 300, 400, 500, 600, 700, 800) comprising:
- a first sheet of mineral or organic glass (1) having a first main face (11) and a second main face (12) and an edge (10),
- a peripheral light source (2, 2', 20) with an emitting face (21, 21') selected from an optical fiber (20) and light emitting diodes (2, 2') each comprising a semiconductor chip on one support section of the diodes (3), the emitting face facing a side of the second face (12) called injection side for a propagation of the injected visible and/or ultraviolet called UV light in the thickness of the first sheet, the first sheet (1) then playing the role of a guide of the injected light, (the injection side optionally being partly recessed or even having a setback),
- to form at least one luminous zone:
- means for extracting the guided light via the first and/or the second main face, which are surface diffusion means of the first and/or the second main face (12') or volume diffusion means in the first sheet,
- and/or when the injected light is UV, means for converting the UV light to visible light via the first and/or the second main face, which are luminophores particularly on the first and/or the second main face
- an optional added peripheral functional element (7), bonded to the first sheet, which is fluid-tight, in particular a functional element which is selected from an overmolding or a preassembled element,
- a fluid-tight cap (4) for covering the source (2, 2', 20), impermeable in particular to liquid water or even water vapor,
- the cap (4), called a facial cap, that is to say, essentially facing the second face, joined by fastening means (81, 82, 83, 86)
- to the first sheet, in particular of organic glass
- and/or to a connecting part (7') bonded to the first sheet,
- and optionally to the functional element the cap having a general what is called inner face oriented toward the second face, the cap being associated with an interfacial element (5, 51, 5'), for the fluid-tight interfacial sealing, impermeable in particular to liquid water or even water vapor, which is arranged between the cap and the connecting part and optionally between the cap and the functional element or integrated with the cap, or integrated with the connecting part or integrated with the first sheet.

2. The luminous vehicle glazing (100, 200, 300, 400, 600) as claimed in claim 1, **characterized in that** the first sheet (1) is made from glass, in particular organic glass, particularly of PC, with a blind hole (70, 8) in its thickness, of the second face (12), for example a setback, to house the source facing the injection side (14).

3. The luminous vehicle glazing (300) as claimed in the preceding claim, **characterized in that** the hole (70, 8) is on the entire perimeter of the second face (12) and the cap (4) forms a frame, in particular integrating said fastening means.

4. The luminous vehicle glazing (200, 500, 700, 800) as claimed in one of the preceding claims, **characterized in that** the glazing comprises an element for masking the source and any interfering light, and/or for masking the fastening (91) of the glazing to the vehicle body (90) by the second face (12), the masking element possibly being
- a part of the functional element (7), in particular a polymer encapsulation,
- and/or a sufficiently opaque enamel (15), on the periphery of the second face and/or on the first face or a face of an added sheet film facing the first face in particular when the functional element is one-sided or two-sided,
- and/or a reflecting surface (15) on the periphery of the second face and/or on the first face or an added face facing the first face.

5. The luminous vehicle glazing (100, 200, 300, 400, 600) as claimed in one of the preceding claims, **characterized in that** the first sheet is organic, transparent and opaque bimaterial and the opaque zone (1') of the first sheet (1), on the periphery of the second face (12) and/or on the first face, forms a masking of the source and of any interfering light, and/or forms a masking of the fastening (91) of the glazing to the vehicle body (90) by the second face (12).

6. The luminous vehicle glazing (100, 200, 300, 400, 500, 600, 700, 800) as claimed in one of the preceding claims, **characterized in that** the space of the radiation emitted before injection, called the coupling space, is gaseous, local, on the periphery of the inner face of the cap (4) or on one side of the cap (4), in particular the fluid-tight interfacial sealing element forms a strip (5, 51, 91').

7. The luminous vehicle glazing (100, 200, 300, 400, 500, 600, 700, 800) as claimed in one of the preceding claims, **characterized in that** the source (2, 2', 20) is fastened to the glazing outside the coupling space, particularly outside the injection side, and for the diodes, by fastening the support section (3), particularly by bonding or two-sided adhesive or clipping, to one of the faces of the first sheet (11, 12), particularly the second face (12), or to the inner face of the cap (4).

8. The luminous vehicle glazing (700) as claimed in one of the preceding claims, **characterized in that** the interfacial sealing element (5'), preferably on the periphery of the cap (4), is a reversible glue, forming part of or constituting said cap (4) fastening means which are accordingly reversible, preferably a glue strip (5') arranged in a gasket particularly in contact with the inner face of the cap or the connecting part (by its free outer face) or the second face, particularly epoxy bicomponent glue.

9. The luminous vehicle glazing (100, 200, 300, 400, 600, 800) as claimed in one of claims 1 to 6, **characterized in that** the interfacial sealing element, preferably on the periphery of the cap (4), is a compressed material (5, 51, 52), the compressive sealing of the material being provided by a closure force of said cap fastening means, particularly the interfacial sealing element is selected from:
- a polymer seal (5, 51) for example made from TPE, EPDM, in particular an O-ring, with lip seal(s),
- a sealing section (52) on the connecting part, selected from polymer, for example lip(s), or on the cap,
- a foam, optionally made adhesive, particularly acrylic foam, PU, rubber (EPDM, etc.), thermoplastic elastomers, TPE, polyester, in particular monocomponent polyester rubber.

10. The luminous vehicle glazing (100, 200, 300, 500, 600, 700, 800) as claimed in one of the preceding claims, **characterized in that** the fastening means (81, 82) are reversible, and are selected from:
- clipping means (82), arranged on the cap, and particularly received for clipping in one or more host zones (72) in the first, in particular organic, sheet, and/or of the connecting part and optionally further received in the functional element;
- clipping means, particularly of the hook type, forming an integral part of the cap, preferably outside in the sealing zone and in particular received in one or more host zones of the first, in particular organic, sheet, and/or of the connecting part and optionally further received in the functional element (7);
- screw means (81).

11. The luminous vehicle glazing (500, 800) as claimed in one of the preceding claims, **characterized in that** the connecting part (7') preferably forms a recessed single-face part having a closed contour such as a frame.

12. The luminous vehicle glazing (100, 200, 300, 400, 500, 600, 700, 800) as claimed in one of the preceding claims, **characterized in that** the cap (4) is a trim, or the cap is masked after fastening the glazing to the body, the cap for example along an edge(s) or forming a frame.

13. The luminous vehicle glazing as claimed in one of the preceding claims, **characterized in that** the cap (4) comprises means (50') for securing said section (3) and/or a cavity (50) for the passage of the connections and/or menas (60) for positioning the support section of the diodes (3).

14. Then luminous vehicle glazing (100, 200, 300, 400, 600, 700, 800) as claimed in one of the preceding claims, **characterized in that** the glazing is single, the first sheet (1) being made of mineral or organic glass, in particular of PC, PMMA, PU, optionally bimaterial (1").

15. The luminous vehicle glazing (500) as claimed in one of claims 1 to 13, **characterized in that** a second sheet (1'), in particular of mineral or organic glass, is laminated by a lamination interlayer to the first sheet and preferably the edge of the first sheet comprises a marginal through cavity where the source is housed, or the second sheet extends beyond the injection side of the first sheet, creating a side setback of the glazing.

16. The luminous vehicle glazing (500) as claimed in one of claims 1 to 13, **characterized in that** the glazing is a multiple glazing, in particular a laminated glazing, a vacuum or insulating double glazing, or even a triple glazing.

17. The luminous vehicle glazing (200, 700, 800) as claimed in one of the preceding claims, **characterized in that** the functional element is duplicate molded, polymeric (7), and **in that** the glazing preferably comprises, between the encapsulation and the glazing, in particular of mineral glass, a layer of mono-, bi- or tricomponent primer, for example based on polyurethane, polyester, polyvinyl acetate, isocyanate.

18. The luminous vehicle glazing (100, 200, 300, 400, 500, 600, 700, 800) as claimed in one of the preceding claims, **characterized in that** in the luminous zone or zones is formed an internal ambience lighting, an internal reading lighting, a light display of internal and/or external indications.

19. The luminous vehicle glazing (100, 200, 300, 400, 500, 600, 700, 800) as claimed in one of the preceding claims, the glazing being selected from:
- side window of a land vehicle, in particular automobile, utility vehicle, truck, train, in particular with the functional element which is a securing part of a window raising system or with the trim cap,
- sliding or fixed roof of a land vehicle, in particular automobile, utility vehicle, truck, train, with a first optionally cambered sheet, in particular a laminated glazing,
- windshield of a land vehicle, in particular automobile, utility vehicle, truck, train, in particular with the light zone or zones (forming an "HUD" signal for example) in the enamel frame or nearby, rear window in particular in the enamel frame or nearby,
- window, windshield of an aerial vehicle,
- glazing for window, roof, of an aquatic vehicle, ship, submarine,
- double or triple glazing in a train, a bus.

20. A vehicle incorporating the luminous vehicle glazing (100, 200, 300, 400, 500, 600, 700, 800) as claimed in one of the preceding claims.
